# EUROPEAN PATENT APPLICATION

(11) **EP 1 857 007 A2**
(43) Date of publication of application: **21.11.2007**
(21) Application number: 07104368.1
(22) Date of filing: 16.03.2007
(51) Int. Cl.: A44B 11/25, B60R 22/18

(54) **Safety anchor for fastenings**

(30) Priority: 12.05.2006 ES 200601231
(71) Applicant: I.T.W. España, S.A., 08520 Barcelona (ES)
(72) Inventor: Badrenas Buscart, Jordi, 08402 Barcelona (ES)
(74) Representative: Carpintero Lopez, Francisco

(57) **Abstract**

The invention relates to a safety anchor for fastenings allowing a quick and simple use, with a lightweight configuration suitable for children, requiring a reduced number of elements and comprising an anchoring base (1) defining a hollow (2), a first pin (4) complementary to a second pin (5) which can be encased in the hollow (2) of the anchoring base (1) and immobilization means for immobilizing the first pin (4) and the second pin (5) with respect to the anchoring base (1).

## Description

### OBJECT OF THE INVENTION

The present invention relates to a safety anchor for fastenings which is applicable in the industry of auxiliary passive safety elements, and more specifically in safety anchors for automotive vehicles in which an anchor is required for a safety belt complying with the requirements provided in current regulations, allowing its use in a quick and simple manner, having a lightweight and ergonomic configuration allowing its use by children, having at the same time the required tensile strength values, a high degree of comfort during its use and a reduced number of elements forming the anchor, with the subsequent saving in production costs.

### BACKGROUND OF THE INVENTION

There are several types of anchors in the field of auxiliary passive safety elements, and more specifically in the field of safety belt anchors preferably used in automotive vehicles, which anchors are subject to compliance of a specific safety regulation to obtain its homologation by the competent authorities according to the geographical area in each case.

The requirements demanded from this type of anchors include certain tensile strength values when a safety belt is anchored, because this is the stress an anchor is subjected to, for example, when a deceleration in the speed of the vehicle occurs during its motion due to different traffic situations

A very extended configuration in safety belt anchors for automotive vehicles consists of a two-point anchor, being located in one of the sides of the user at the height of the hip. Although this anchor fixes two points, it is a three-point anchor since one of the points incorporates the bands of the belt according to two directions, the ends of which are anchored to two other points.

The drawback of this anchor configuration is that it cannot be used by children, because their size is smaller than that required for the use of these belts: a child further requires greater protection than an adult, therefore the areas of contact with the bands of the belt in this type of anchors do not suitably protect or secure the body, especially the trunk, of a child in the event of sudden braking while driving.

There is another configuration of anchors especially designed for their use by children, for which purpose they have a three-point anchor, one band being located in the lower area between the user's legs and the other two bands in a symmetrical manner from the sides passing through the shoulder area, the anchor being located in the area corresponding to the chest of the user, therefore the degree of fastening and especially the area of contact of the bands of the belt with the child's body are more suitable for this type of users, injuries caused in the event of the actuation of the safety belt being prevented due to this reason.

The first drawback of this type of belts is that the two side points must be carried out independently, given that the lower point is normally connected permanently to the anchor. This form of anchoring is uncomfortable and slow, and is more problematic in the case of children when the anchoring must be carried out quickly given the continuous mobility and restlessness of these users, because one of the side points needs to be anchored first and the second side point must be anchored afterwards, the child being able to be released between the anchoring of the two side points, this same problem arising during the release of the anchoring.

On the other hand, this type of anchors has another drawback, because for the anchor to have the tensile strength values required for its homologation, these values are achieved by means using a large number of elements, materials precisely having high mechanical strength values being used to that end, such as metallic materials for example, therefore the weight of the anchor is high, the comfort in its use being considerably reduced, especially for children. This type of anchors further consists of a large number of elements in order to achieve the immobilization of the points forming it, which negatively affects the cost of manufacturing the anchor.

### DESCRIPTION OF THE INVENTION

The present invention relates to a safety anchor for fastenings allowing its use in a quick and simple manner, having a lightweight and ergonomic configuration suitable for a comfortable use by children and at the same time complying with the provisions of current regulations, especially in relation to tensile strength values.

The safety anchor object of the invention comprises an anchoring base having a general planar configuration and in the lower end area of which the lower band of the safety belt is connected, normally by stitching, which lower band is placed between the user's legs, preferably being manufactured as a single metal part, given its strength.

Two of the side ends of the anchoring base are folded in a U-shape, both of them towards the same side, such that a hollow is defined in one of the faces of said anchoring base, which hollow is intended to house a first pin complementary to a second pin in a tight manner and without the possibility of movement except in one direction, which pins are encased in said hollow and each of them immobilizes a side fastening element or band of the safety belt.

Like in the case of the anchoring base, the first pin and the second pin are preferably made of a metal material, given that these are the three anchoring points which must resist a greater stress while the anchor is in service, both of them having a suitable planar configuration for being simultaneously encased and housed in the hollow of the anchoring base

The invention also comprises immobilization means for immobilizing the first pin and the second pin with respect to the anchoring base for the purpose of locking said first pin and second pin in the anchoring base.

The possibility is contemplated that the immobilization means mentioned in the previous paragraph are carried out from a first recess which the first pin has in an outer side, i.e. the side which is not in contact with the second pin when both of them are in the anchoring position, which first recess is intended to receive the action of a first shaft immobilizing the first pin with respect to the anchoring base.

In a complementary manner, the second pin has a second recess configured to receive the action of a second shaft immobilizing said second pin in the hollow of the anchoring base.

In an embodiment variant, it has been provided that the anchoring base is arranged in an immobilized manner inside a casing or element containing it and protecting the user from direct contact with the anchoring base, said casing being formed by a front cover which is fixed to a rear cover, which has an opening whereby the hollow of the anchoring base can be accessed from the outside for the purpose of encasing the first pin and the second pin.

Both the front cover and the rear cover are preferably made of plastic, although they can be made of any other material having suitable mechanical properties, for the purpose of making the element containing the anchoring base ergonomic, lightweight and comfortable for the user during its use, since it is directly in contact with the his or her chest.

For the purpose of incorporating the immobilization means in the previously described casing, the possibility is contemplated that the anchoring base has a first groove in one of the folded sides which is complementary to a second groove located in the other side, each of said first groove and second groove being configured to house the first shaft which allows immobilizing the first pin and the second shaft which allows immobilizing the second pin respectively.

It has also been provided that the first shaft is fixed to a first support on which a first elastic element preferably formed by a spring acts, which elastic element is assembled inside the front cover and the rear cover, on the inner surface of which it acts, causing the first shaft to act on the first pin, immobilizing it.

In a complementary manner, it has been provided that the second shaft is fixed to a second support on which a second elastic element preferably formed by a spring acts, which elastic element is assembled inside the front cover and the rear cover, on the inner surface of which it acts, causing the second shaft to act on the second pin, immobilizing it.

The possibility is contemplated that the rear cover has first guides for guiding the first support and second guides for guiding the second support for the purpose of making the movement of the first support and the second support be guided and occurring in the same direction as the first groove and the second groove.

The ends of the first pin and the second pin preferably have a certain degree of inclination, so that when they are inserted in the hollow of the anchoring base, they cause a gentle movement of the first and second shaft, until the shafts lock the first and second pin upon making contact with the corresponding recesses.

In a practical embodiment variant of the object of the invention, in order to provide it with a quick and comfortable releasing means, the possibility is contemplated that it comprises a push-button, which is located inside the front cover and partially outside it and can be accessed from the outside through an opening incorporated by said front cover, preferably being made of a lightweight material, such as plastic for example.

Said push-button incorporates a first inclined guide in a face which is placed on the anchoring base, which inclined guide is configured to make contact with the first shaft and cause its movement in the direction opposite to the actuation direction of the first elastic element, such that the immobilization of the first pin is interrupted when said push-button is actuated by a user.

In a complementary and simultaneous manner, the push-button incorporates a second inclined guide configured to make contact with the second shaft and cause its movement in the direction opposite to the actuation direction of the second elastic element, such that the immobilization of the second pin is interrupted when said push-button is actuated by a user.

For the purpose of making the aforementioned push-button comfortable to use, it has been provided that it comprises an ergonomic actuation area, preferably having a fingertip shape and being accessible from the outer part of the front cover, said push-button comprising an elastic element, such as a spring for example, configured to keep the push-button in a position in which the anchoring of the first pin and second pin is not released, i.e. in an immobilization position

In another embodiment variant, it has been provided that the anchor comprises an elastic ejection element, which can be a spring, and the movement of which is guided by guides in a lower area of the inner part of the rear cover, against which it acts, said elastic ejection element having a support acting on the ends of the first pin and the second pin when the latter are immobilized inside the hollow, acting thereupon and causing their ejection when they are released.

For the purpose of making the anchor ergonomic and comfortable for the user during its use, it has been provided that the first pin is fixed, in an area opposite to that of the housing in the hollow, to a first body preferably made of a lightweight material such as plastic for example, which is turn formed by a first front cover and a first rear cover.

In a complementary manner, the second pin is fixed, in an area opposite to that of the housing in the hollow, to a second body preferably made of a lightweight material such as plastic for example, which is in turn formed by a second front cover and a second rear cover.

On the other hand, the possibility is contemplated that the first body and the second body can be coupled by coupling means, forming a compact block, such that the first pin and the second pin are anchored simultaneously as if it were a single anchoring point, which results in greater ease and speed in carrying out the anchoring as well as in its release.

Said coupling means can consist of the arrangement of a pin, by way of a pivot in the first body, configured to be coupled or encased in a cavity which the second body located in correspondence with the pin has.

Finally and for the purpose of being able to connect the elements of the anchor proposed by the invention to the fastening elements, such as the bands of a safety belt, the possibility is contemplated that the anchoring base has a lower groove, which the rear cover and the front cover also have, which the fastening band traverses, for example being sewn for its fixing to said anchoring base. On the other hand and for the same purpose of connecting the side fastening bands, the first pin has a first side groove which the first rear cover also has, and the second pin has a second side groove which the second rear cover also has

Therefore, according to the described invention, the safety anchor for fastenings proposed by the invention forms a progress in anchors used to date and satisfactorily solves the aforementioned drawbacks along the lines of allowing their use in a quick and simple manner even with one hand, complying with the requirements provided in current regulations at the same time that it has a suitable lightweight and ergonomic configuration for a comfortable use, especially by children, requiring a reduced number of elements entailing a reduction in the manufacturing costs.

### DESCRIPTION OF THE DRAWINGS

To complement the description which is being made and for the purpose of aiding to better understanding the features of the invention according to a preferred practical embodiment thereof, a set of drawings is attached as an integral part of said description in which the following has been shown with an illustrative and non-limiting character:

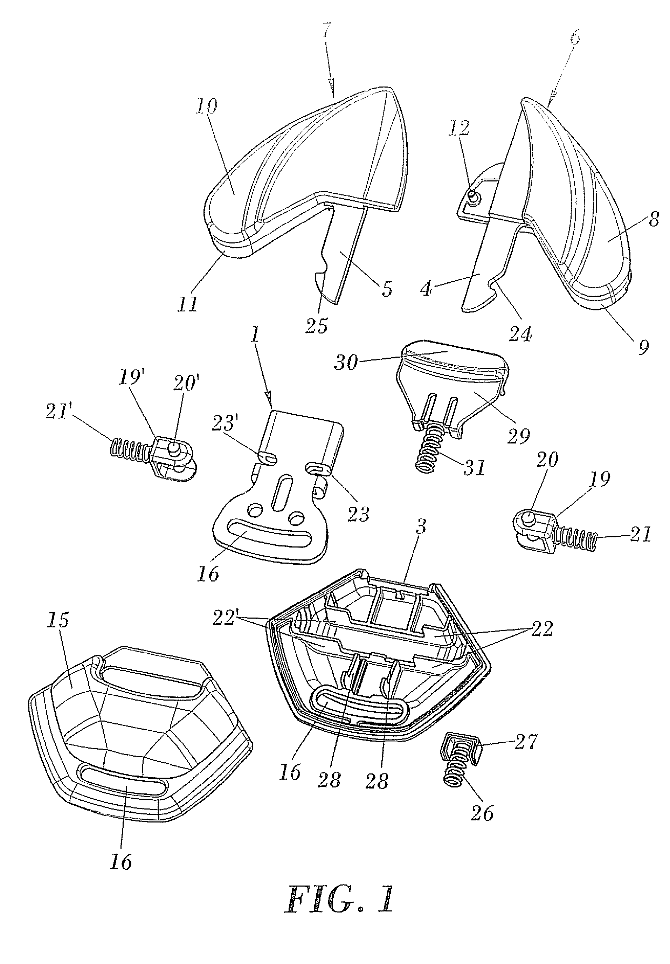

Figure 1 shows an exploded front perspective view of the elements forming the safety anchor object of the invention.

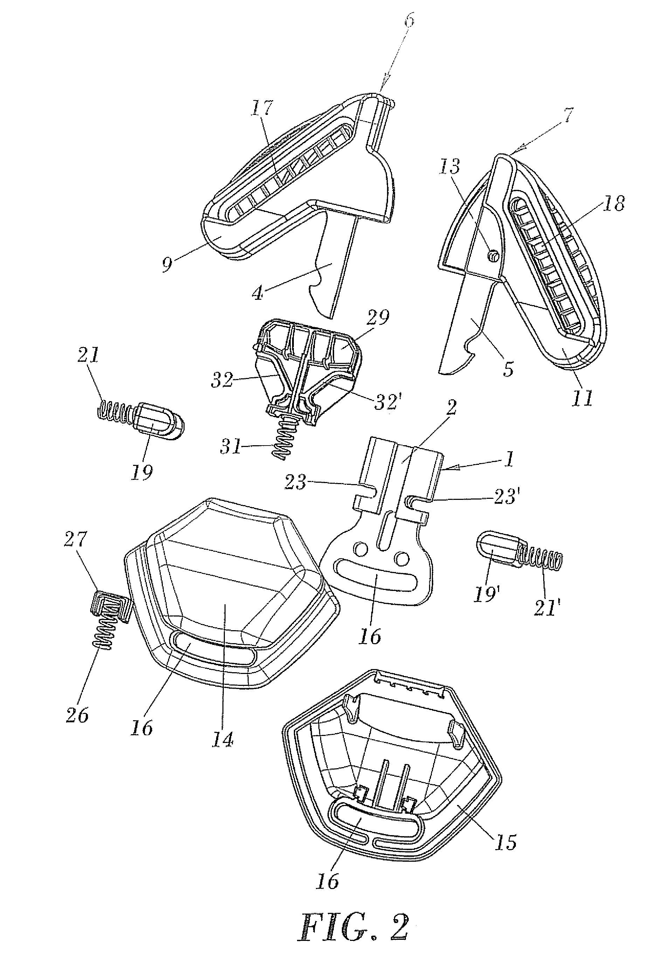

Figure 2 shows a view like that of the previous figure from the opposite side, i.e. from the rear.

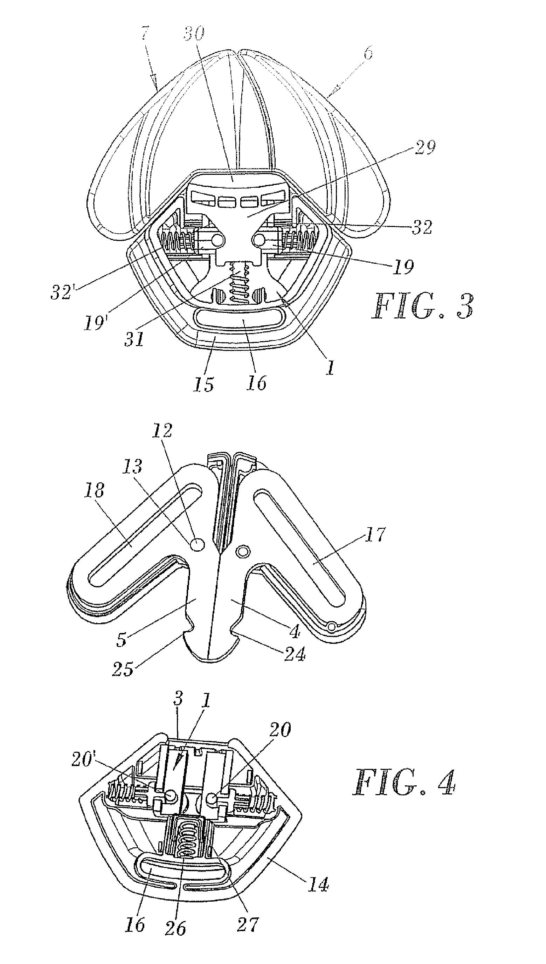

Figure 3 shows a partially sectioned, front elevational view of the anchor in an immobilization or anchoring position.
Figure 4 shows a partially sectioned front elevational view of the anchor in a releasing position, in which the coupling between the first body and the second body of the first and the second pin, forming a compact block, can be seen.

### PREFERRED EMBODIMENT OF THE INVENTION

In view of the indicated figures, it can be seen how in one of the possible embodiments of the invention, the safety anchor for fastenings comprises an anchoring base (1), in the lower end area of which there is connected a fastening element of a safety belt, in which a hollow (2) configured to house a first pin (4) complementary to a second pin (5) is defined, which pins are encased in said hollow (2), the anchor having immobilization means for immobilizing the first pin (4) and the second pin (5) with respect to the anchoring base (1).

The possibility is contemplated that the aforementioned immobilization means are carried out with a first recess (24) which the first pin (4) has configured to receive the action of a first shaft (20) immobilizing said first pin (4) with respect to the anchoring base (1).

In a complementary manner, the second pin (5) has a second recess (25) configured to receive the action of a second shaft (20') immobilizing said second pin (5) in the hollow (2) of the anchoring base (1), as can be seen in the figures

In an embodiment variant, the anchoring base (1) is fixed in an inner face of a rear cover (14) which is in turn fixed to a front cover (15), said rear cover (14) having an opening (3) whereby the hollow (2) of the anchoring base (1) can be accessed from the outside.

The possibility is also contemplated that the anchoring base (1) has a first groove (23) complementary to a second groove (23'), each of said first groove (23) and second groove (23') being configured to house the first shaft (20) which allows immobilizing the first pin (4), and the second shaft (20') which allows immobilizing the second pin (5), respectively.

On the other hand, it has been provided that a first support (19) configured to receive the action of a first elastic element (21) is fixed to the first shaft (20), causing the first shaft (20) to act on the first pin (4), immobilizing it.

In a complementary manner, a second support (19') configured to receive the action of a second elastic element (21') is fixed to the second shaft (20'), causing the second shaft (20') to act on the second pin (5), immobilizing it

The movement of the first support (19) and the second support (19') can be guided by first guides (22) and second guides (22'), respectively, which the rear cover has (14).

In another practical embodiment variant of the object of the invention, the anchor comprises a push-button (29) located inside the front cover (15) and partially outside it, having a first inclined guide (32) configured to make contact with the first shaft (20) and cause its movement in the direction opposite to the actuation direction of the first elastic element (21), such that the first pin (4) is released when said push-button (29) is actuated by a user.

In a complementary and simultaneous manner, the push-button (29) has a second inclined guide (32') configured to make contact with the second shaft (20') and cause its movement in the direction opposite to the actuation direction of the second elastic element (21'), such that the second pin (5) is released when said push-button (29) is actuated by a user

The possibility is contemplated that the push-button (29) comprises an ergonomic actuation area (30) which can be accessed from the outer part of the front cover (15), said push-button (29) also comprising an elastic element (31) configured to keep the push-button (29) in a position in which the anchoring of the first pin (4) and second pin (5) is not released.

In another embodiment variant, the anchor comprises an elastic ejection element (26), the movement of which is guided in a lower area of the inner part of the rear cover (14) by guides (28), said elastic ejection element (26) having a support (27) configured to act on the ends of the first pin (4) and the second pin (5) when the latter are immobilized inside the hollow (2), causing their ejection when they are released.

On the other hand, it has been provided that the first pin (4) is fixed to a first body (6) formed by a first front cover (8) and a first rear cover (9).

In a complementary manner, the second pin (5) is fixed to a second body (7) formed by a second front cover (10) and a second rear cover (11).

The possibility is also contemplated that said first body (6) and second body (7) can be coupled by coupling means, forming a compact block, said coupling means being able to consist of the arrangement of a pin (12) in the first body (6), configured to be coupled in a cavity (13) which the second body (7) located in correspondence with the pin (12) has.

Finally, the possibility has been provided that the anchoring base (1) has a lower groove (16), like the rear cover (14) and the front cover (15), for connecting the fastening band On the other hand, the first pin (4) has a first side groove (17) which the first rear cover (9) also has, and the second pin (5) has a second side groove (18) which the second rear cover (11) also has.

In view of this description and set of drawings, the person skilled in the art can understand that the embodiments of the invention which have been described can be combined in many ways within the object of the invention. The invention has been described according to several preferred embodiments thereof, but it will be evident for a person skilled in the art that many variations can be introduced in said preferred embodiments without departing from the object of the claimed invention.

## Claims

1. - A safety anchor for fastenings, **characterized in that** it comprises an anchoring base (1) in which a hollow (2) is defined, a first pin (4) complementary to a second pin (5) which can be encased in the hollow (2) of the anchoring base (1) and immobilization means for immobilizing the first pin (4) and the second pin (5) with respect to the anchoring base (1).

2. - An anchor according to claim 1, **characterized in that** the immobilization means for immobilizing the first pin (4) and the second pin (5) in the anchoring base (1) consist of a first recess (24) which the first pin (4) has, configured to receive the action of a first shaft (20) immobilizing said first pin (4) in the hollow (2), and a second recess (25) which the second pin (5) has, configured to receive the action of a second shaft (20') immobilizing said second pin (5) in said hollow (2).

3. - An anchor according to any of the previous claims, **characterized in that** the anchoring base (1) is immobilized inside a front cover (15) which is fixed to a rear cover (14), which has an opening (3) whereby the hollow (2) can be accessed from the outside.

4. - An anchor according to claim 3, **characterized in that** the anchoring base (1) has a first groove (23) configured to house the first shaft (20), which is configured to immobilize the first pin (4) in the hollow (2) by the action of a first elastic element (21) acting on a first support (19) which is fixed to said first shaft (20), the anchoring base (1) also having a second groove (23') configured to house the second shaft (20'), which is configured to immobilize the second pin (5) in the hollow (2) by the action of a second elastic element (21') acting on a second support (19') which is fixed to said second shaft (20').

5. - An anchor according to claim 4, **characterized in that** the movement of the first support (19) is guided by first guides (22) located in the rear cover (14), whereas the movement of the second support (19') is guided by second guides (22') which are also located in the rear cover (14).

6. - An anchor according to any of claims 3 to 5, **characterized in that** it comprises a push-button (29) located partially inside the front cover (15), having a first inclined guide (32) configured to cause a movement of the first shaft (20) in the direction opposite to the actuation direction of the first elastic element (21) when said push-button (29) is actuated by a user, also having a second inclined guide (32') configured to cause a movement of the second shaft (20') in the direction opposite to the actuation direction of the second elastic element (21') when said push-button is actuated by a user, releasing the immobilization of the first pin (4) and second pin (5).

7. - An anchor according to claim 6, **characterized in that** the push-button (29) comprises an ergonomic actuation area (30) which can be accessed from an outer part of the front cover (15), also comprising an elastic element (31) configured to keep the push-button (29) in a position in which the anchoring of the first pin (4) and second pin (5) is not released.

8. - An anchor according to claim 6 or 7, **characterized in that** it comprises an elastic ejection element (26) having a support (27), the movement of which is guided by guides (28) located in the rear cover (14), being configured to act on the ends of the first pin (4) and the second pin (5), causing their ejection when they are released.

9. - An anchor according to any of the previous claims, **characterized in that** the first pin (4) has a first body (6) formed by a first front cover (8) and a first rear cover (9), and **in that** the second pin (5) has a second body (7) formed by a second front cover (10) and a second rear cover (11).

10. - An anchor according to claim 9, **characterized in that** the first body (6) and the second body (7) are configured to form a compact block joined by coupling means.

11. - An anchor according to claim 10, **characterized in that** the coupling means of the first body (6) and the second body (7) consist of a pin (12) which the first body (6) has, configured to be coupled in a cavity (13) which the second body (7) located in correspondence with the pin (12) has.

12. - An anchor according to any of the previous claims, **characterized in that** the anchoring base (1) is connected to a first fastening element by means of a lower groove (16) which the rear cover (14) and the front cover (15) also have, whereas the first pin (4) is connected to a second fastening element by means of a first side groove (17) which the first rear cover (9) has, and the second pin (5) is connected to a third fastening element by means of a second side groove (18) which the second rear cover (11) also has
